(19) **Europäisches Patentamt**
**European Patent Office**
**Office européen des brevets**

(11) **EP 4 261 661 A1**

(12) **EUROPEAN PATENT APPLICATION**
published in accordance with Art. 153(4) EPC

(43) Date of publication:
**18.10.2023 Bulletin 2023/42**

(21) Application number: **21917264.0**

(22) Date of filing: **16.12.2021**

(51) International Patent Classification (IPC):
***G06F 3/01*** (2006.01)

(52) Cooperative Patent Classification (CPC):
**G06F 3/01; G06T 7/41; G06T 7/80; G06T 19/00**

(86) International application number:
**PCT/CN2021/138725**

(87) International publication number:
**WO 2022/148224 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.01.2021 CN 202110018281**

(71) Applicant: **Huawei Technologies Co., Ltd.**
**Shenzhen, Guangdong 518129 (CN)**

(72) Inventors:
• **ZHU, Yingcheng**
**Shenzhen, Guangdong 518129 (CN)**
• **WANG, He**
**Shenzhen, Guangdong 518129 (CN)**
• **TANG, Shunyao**
**Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **HANDLE CORRECTION METHOD, ELECTRONIC DEVICE, CHIP, AND READABLE STORAGE MEDIUM**

(57)     Disclosed are a handle correction method, an electronic device, a chip, and a computer-readable storage medium, relating to the field of terminals. The method includes: measuring a present spatial pose of an electromagnetic handle by using a binocular camera of a head-mounted device; when the present spatial pose of the electromagnetic handle remains unchanged, adjusting a current parameter of a transmitting coil, to obtain a plurality of groups of current parameters and a plurality of groups of corresponding induced electromotive forces of a receiving coil; and determining an induction coefficient between the transmitting coil and the receiving coil based on the plurality of groups of current parameters and the plurality of groups of induced electromotive forces, to determine a spatial pose of the electromagnetic handle based on the induction coefficient and an induced electromotive force of the receiving coil. When a 6DoF pose of the electromagnetic handle is obtained through binocular vision, the current parameter of the transmitting coil is changed, to obtain a plurality of groups of corresponding induced electromotive forces, so that calibration of the induction coefficient is implemented.

Measure a present spatial pose of an electromagnetic handle by using a head-mounted device — 21

When the present spatial pose of the electromagnetic handle remains unchanged, adjust a current parameter of a transmitting coil, and record a plurality of groups of current parameters — 22

Obtain a plurality of groups of induced electromotive forces of a receiving coil corresponding to the plurality of groups of current parameters — 23

Determine an induction coefficient between the transmitting coil and the receiving coil based on the plurality of groups of current parameters and the plurality of groups of induced electromotive forces — 24

FIG. 2

**Description**

This application claims priority to Chinese Patent Application No. 202110018281.3, filed with the China National Intellectual Property Administration on January 7, 2021 and entitled "HANDLE CORRECTION METHOD, ELECTRONIC DEVICE, CHIP, AND READABLE STORAGE MEDIUM", which is incorporated herein by reference in its entirety.

**TECHNICAL FIELD**

This application relates to the field of terminal technologies, and in particular, to a handle correction method, an electronic device, a chip, and a readable storage medium.

**BACKGROUND**

With the gradual maturity of head-mounted device technologies, various technologies of virtual display devices also develop rapidly. These technologies include virtual reality (Virtual Reality, VR), augmented reality (Augmented Reality, AR for short), mixed reality (Mixed Reality, MR for short), and the like. VR is to completely immerse a user in a virtual world, AR is to integrate virtual information with a real environment to enhance the real environment, and MR is to mix a real world and a virtual world, to create a new visual environment which includes both physical entities and virtual information.

Electromagnetic handles become one of important devices for handle interaction in the fields of AR, VR, and MR due to a large detection range and unobstructed use. Positioning of an electromagnetic handle may be as follows: A magnetic field is generated by using a transmitting coil of a head-mounted device, an induced electromotive force is generated by using a receiving coil disposed in the electromagnetic handle, and six degrees of freedom (Six Degrees of Freedom, 6DoF) of the electromagnetic handle is determined based on a magnitude of the induced electromotive force. Calibration of an induction coefficient directly affects tracking precision of the electromagnetic handle. The induction coefficient is affected by a magnetic permeability, a quantity of turns, an area, a current magnitude, and a current frequency that are of a transmitting coil, an area and a quantity of turns that are of a receiving coil, and the like. However, it is difficult to accurately measure parameters such as a magnetic permeability, a quantity of turns, and an area that are of a coil. How to perform initial calibration of the induction coefficient or how to perform correction of the induction coefficient after a user uses the electromagnetic handle for a long time becomes a major obstruction to improve tracking precision in use of the electromagnetic handle.

**SUMMARY**

In view of this, it is necessary to provide a handle correction method. The handle correction method can overcome the foregoing problem and implement calibration of an induction coefficient.

According to a first aspect, an embodiment of this application provides a handle correction method. The method includes: measuring a present spatial pose of an electromagnetic handle by using a head-mounted device, where the head-mounted device includes a binocular camera and a first coil, the electromagnetic handle includes a second coil, one of the first coil and the second coil is a transmitting coil, and the other of the first coil and the second coil is a receiving coil; when the present spatial pose of the electromagnetic handle remains unchanged, adjusting a current parameter of the transmitting coil, and recording a plurality of groups of current parameters; obtaining a plurality of groups of induced electromotive forces of the receiving coil corresponding to the plurality of groups of current parameters; and determining an induction coefficient between the first coil and the second coil based on the plurality of groups of current parameters and the plurality of groups of induced electromotive forces, to determine a spatial pose of the electromagnetic handle based on the induction coefficient and an induced electromotive force of the receiving coil.

According to the technical solution, a 6DoF pose of the electromagnetic handle may be first obtained through binocular vision, and then the plurality of groups of induced electromotive forces are obtained by changing the current parameter of the transmitting coil, so that calibration of the induction coefficient is implemented based on the plurality of groups of current parameters and the plurality of groups of induced electromotive forces.

In a possible implementation, the electromagnetic handle includes a feature part, and the measuring a present spatial pose of an electromagnetic handle by using a head-mounted device includes: capturing, by using a binocular camera, a handle image that includes the feature part; and performing analysis processing on the handle image by using a preset algorithm, to obtain the present spatial pose of the electromagnetic handle, where the feature part includes a texture pattern provided on a surface of the electromagnetic handle, or a plurality of light sources disposed on the electromagnetic handle, and the preset algorithm includes a PNP (Perspective-N-Points) algorithm or an epipolar geometry algorithm.

According to the technical solution, a lamp design or a texture design may be performed on the electromagnetic handle, which facilitates obtaining a 6DoF pose of the electromagnetic handle through binocular vision, so that calibration of the induction coefficient is implemented.

In a possible implementation, the current parameter includes a current magnitude or a current frequency.

According to the technical solution, it may be implemented that a current magnitude or a current frequency of the transmitting coil is changed, to obtain the plurality of groups of induced electromotive forces, so that calibration of the induction coefficient is implemented based on a plurality of groups of current magnitudes and the plurality of groups of induced electromotive forces, or calibration of the induction coefficient is implemented based on a plurality of groups of current frequencies and the plurality of groups of induced electromotive forces.

In a possible implementation, the determining an induction coefficient between the first coil and the second coil based on the plurality of groups of current parameters and the plurality of groups of induced electromotive forces includes: performing linear fitting on a plurality of groups of current magnitudes and the plurality of groups of induced electromotive forces, and calculating a straight line slope obtained by fitting, to obtain the induction coefficient; or obtaining a plurality of groups of current angular frequencies through calculation based on a plurality of groups of current frequencies, performing linear fitting on the plurality of groups of current angular frequencies and the plurality of groups of induced electromotive forces, and calculating a straight line slope obtained by fitting, to obtain the induction coefficient.

According to the technical solution, it is implemented that when a 6DoF pose of the electromagnetic handle is obtained through binocular vision, a current magnitude or a current frequency of the transmitting coil is changed, to obtain the plurality of groups of induced electromotive forces, and then the straight line slope is solved through the linear fitting to obtain the induction coefficient.

In a possible implementation, the electromagnetic handle further includes an inertial measurement unit (Inertial Measurement Unit, IMU), and the handle correction method further includes: determining posture information of the electromagnetic handle by using the IMU; and performing information fusion on the posture information and the present spatial pose by using a preset fusion algorithm, where the preset fusion algorithm includes a filtering-based fusion algorithm or an optimization-based fusion algorithm rate.

According to the technical solution, a 6DoF pose obtained through binocular vision and a measurement result of the IMU may be fused, to improve precision of solving the 6DoF pose through the binocular vision.

In a possible implementation, the determining a spatial pose of the electromagnetic handle based on the induction coefficient and an induced electromotive force of the receiving coil includes: determining relative locations and direction information of the electromagnetic handle and the head-mounted device based on the induced electromotive force of the receiving coil and the induction coefficient, to obtain the spatial pose of the electromagnetic handle based on the relative locations and the direction information.

According to the technical solution, it may be implemented that electromagnetic positioning is performed on the electromagnetic handle based on the induced electromotive force and the induction coefficient.

According to a second aspect, an embodiment of this application provides a handle correction method. The handle correction method includes: measuring a plurality of groups of spatial poses of an electromagnetic handle by using a head-mounted device when a current parameter of a transmitting coil remains unchanged, where the head-mounted device includes a binocular camera and a first coil, the electromagnetic handle includes a second coil, one of the first coil and the second coil is the transmitting coil, the other of the first coil and the second coil is a receiving coil, and the current parameter includes a current magnitude and a current frequency; obtaining a plurality of groups of induced electromotive forces of the receiving coil corresponding to the plurality of groups of spatial poses; and determining an induction coefficient between the first coil and the second coil based on the plurality of groups of spatial poses and the plurality of groups of induced electromotive forces, to determine a spatial pose of the electromagnetic handle based on the induction coefficient and an induced electromotive force of the receiving coil.

According to the technical solution, when the current magnitude and the current frequency that are of the transmitting coil remain unchanged, a plurality of groups of 6DoF poses of the electromagnetic handle and a plurality of groups of induced electromotive forces corresponding to the plurality of groups of 6DoF poses may be obtained by using a vision technology, so that calibration of the induction coefficient is implemented based on the plurality of groups of 6DoF poses and the plurality of groups of induced electromotive forces.

In a possible implementation, the electromagnetic handle includes a feature part, and the measuring a plurality of groups of spatial poses of an electromagnetic handle by using a head-mounted device includes: capturing, by using a binocular camera, handle images that are of the electromagnetic handle under a plurality of spatial locations and that include the feature part; and performing analysis processing on the handle image by using a preset algorithm, to obtain the plurality of groups of spatial poses of the electromagnetic handle, where the feature part includes a texture pattern provided on a surface of the electromagnetic handle, or a plurality of light sources disposed on the electromagnetic handle, and the preset algorithm includes a PNP algorithm or an epipolar geometry algorithm.

According to the technical solution, a lamp design or a texture design may be performed on the electromagnetic handle, which facilitates obtaining a 6DoF pose of the electromagnetic handle through binocular vision, so that calibration of the induction coefficient is implemented.

In a possible implementation, the determining an induction coefficient between the first coil and the second coil based on the plurality of groups of spatial poses and the plurality of groups of induced electromotive forces includes: obtaining a plurality of groups of initial induction coefficients through calculation based on the plurality of groups of spatial poses and the plurality of groups of induced electromotive forces, and using an average value of the plurality of groups of initial induction coefficients as the induction coefficient between the first coil and the second coil.

According to the technical solution, it may be implemented that a plurality of groups of induction coefficients are obtained based on the plurality of groups of spatial poses and the plurality of groups of induced electromotive forces, and the induction coefficient between the first coil and the second coil is obtained by averaging and solving.

In a possible implementation, the electromagnetic handle further includes an IMU, and the handle correction method further includes: determining posture information of the electromagnetic handle by using the IMU; and performing information fusion on the posture information and the spatial pose by using a preset fusion algorithm, where the preset fusion algorithm includes a filtering-based fusion algorithm or an optimization-based fusion algorithm.

According to the technical solution, a 6DoF pose obtained through binocular vision and a measurement result of the IMU may be fused, to improve precision of solving the 6DoF pose through the binocular vision.

In a possible implementation, the determining a spatial pose of the electromagnetic handle based on the induction coefficient and an induced electromotive force of the receiving coil includes: determining relative locations and direction information of the electromagnetic handle and the head-mounted device based on the induced electromotive force of the receiving coil and the induction coefficient, to obtain the spatial pose of the electromagnetic handle based on the relative locations and the direction information.

According to the technical solution, it may be implemented that electromagnetic positioning is performed on the electromagnetic handle based on the induced electromotive force and the induction coefficient.

According to a third aspect, an embodiment of this application provides a computer-readable storage medium. The computer-readable storage medium includes computer instructions. When the computer instructions are run on an electronic device, the electronic device is enabled to perform the handle correction method according to the first aspect or the second aspect.

According to a fourth aspect, an embodiment of this application provides an electronic device. The electronic device includes a processor and a memory. The memory is configured to store instructions, and the processor is configured to invoke the instructions in the memory, so that the electronic device performs the handle correction method according to the first aspect or the second aspect.

According to a fifth aspect, an embodiment of this application provides a computer program product. When the computer program product is run on a computer, the computer is enabled to perform the handle correction method according to the first aspect or the second aspect.

According to a sixth aspect, an embodiment of this application provides a chip. The chip is coupled to a memory in an electronic device and is configured to control the electronic device to perform the handle correction method according to the first aspect or the second aspect.

It may be understood that the computer-readable storage medium provided in the third aspect, the electronic device provided in the fourth aspect, the computer program product provided in the fifth aspect, and the chip provided in the sixth aspect all correspond to the method in the first aspect or the second aspect. Therefore, for beneficial effects that can be achieved by the computer-readable storage medium, the electronic device, the computer program product, and the chip, reference may be made to the beneficial effects in the corresponding method provided above. Details are not described herein again.

**BRIEF DESCRIPTION OF DRAWINGS**

FIG. 1 is a schematic diagram of an application scenario of a handle correction method according to an embodiment of this application;

FIG. 2 is a schematic flowchart of a handle correction method according to an embodiment of this application;

FIG. 3A and FIG. 3B are schematic diagrams of a structure of a possible electromagnetic handle according to an embodiment of this application;

FIG. 4A is a schematic diagram of linear fitting of a plurality of groups of current magnitudes and a plurality of groups of induced electromotive forces according to an embodiment of this application;

FIG. 4B is a schematic diagram of linear fitting of a plurality of groups of current angular frequencies and a plurality of groups of induced electromotive forces according to an embodiment of this application;

FIG. 5 is a schematic flowchart of a handle correction method according to another embodiment of this application; and

FIG. 6 is a schematic diagram of a possible structure of an electronic device according to an embodiment of this application.

## DESCRIPTION OF EMBODIMENTS

It should be noted that "at least one" means one or a plurality of and "a plurality of" means two or more in this application. "And/or" describes an association relationship between associated objects, and represents that three relationships may exist. For example, A and/or B may represent the following cases: Only A exists, both A and B exist, and only B exists, where A and B may be singular or plural. In the specification, claims, and accompanying drawings of this application, the terms "first", "second", "third", "fourth", and so on (if existent) are intended to distinguish between similar objects but do not necessarily indicate a specific order or sequence.

For ease of understanding, descriptions of some concepts related to embodiments of this application are provided as examples for reference, as shown in the following:

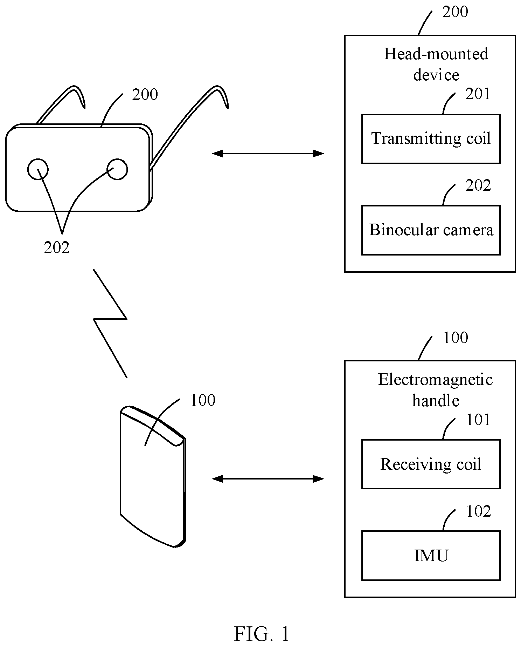

Refer to FIG. 1. FIG. 1 is a schematic diagram of an application scenario of a handle correction method according to an embodiment of this application. This embodiment may include: an electromagnetic handle 100 and a head-mounted device 200. The head-mounted device 200 may be an AR head-mounted device, a VR head-mounted device, an MR head-mounted device, or the like.

In some embodiments, a transmitting coil 201 and a binocular camera 202 may be disposed in the head-mounted device 200. Optionally, the binocular camera 202 may be a dual infrared camera, which may implement synchronous exposure of an image. A receiving coil 101 and an inertial measurement unit (inertial measurement unit, IMU) 102 may be disposed in the electromagnetic handle 100. The IMU 102 may be configured to determine posture information of the electromagnetic handle 100. Optionally, the receiving coil 101 and the transmitting coil 201 are orthogonal coils, for example, three-axis orthogonal hollow coils. The head-mounted device 200 may perform pairing communication with the electromagnetic handle 100, to establish a wireless communication connection. The transmitting coil 201 of the head-mounted device 200 generates a magnetic field, and the receiving coil 101 of the electromagnetic handle 100 generates an induced electromotive force. A magnitude of the induced electromotive force is related to relative locations and directions of the transmitting coil 201 and the receiving coil 101. The head-mounted device 200 may determine a 6DoF pose of the electromagnetic handle 100 based on the magnitude of the induced electromotive force. For example, the head-mounted device 200 may first obtain a 6DoF pose of the head-mounted device 200 by using a conventional technology, and then relative locations and direction information of the head-mounted device 200 and the electromagnetic handle 100 are obtained based on the induced electromotive force, so that the 6DoF pose of the electromagnetic handle 100 may be obtained through conversion.

In some embodiments, the transmitting coil 201 may also be disposed in the electromagnetic handle 100, and the receiving coil 101 is disposed in the head-mounted device 200. The head-mounted device 200 may also determine the 6DoF pose of the electromagnetic handle 100 based on the magnitude of the induced electromotive force of the receiving coil 101.

In some embodiments, when the 6DoF pose of the electromagnetic handle 100 is obtained through conversion based on the induced electromotive force, handle posture information measured by the IMU 102 may be further fused, to improve precision of the 6DoF pose of the electromagnetic handle 100. For example, the 6DoF pose of the electromagnetic handle 100 obtained through conversion and the handle posture information measured by the IMU 102 are fused by using a filtering-based algorithm, an optimization-based algorithm, or the like.

It may be understood that there are six degrees of freedom of the electromagnetic handle 100 in total, and the six degrees of freedom may be classified into two types: translation and rotation. The electromagnetic handle 100 may translate in three degrees of freedom: forward/backward, up/down, and leftward/rightward. The electromagnetic handle 100 may also rotate in three degrees of freedom: pitch (Pitch), roll (Roll), and yaw (Yaw). Three types of degrees of freedom of translation + three types of degrees of freedom of rotation = six degrees of freedom.

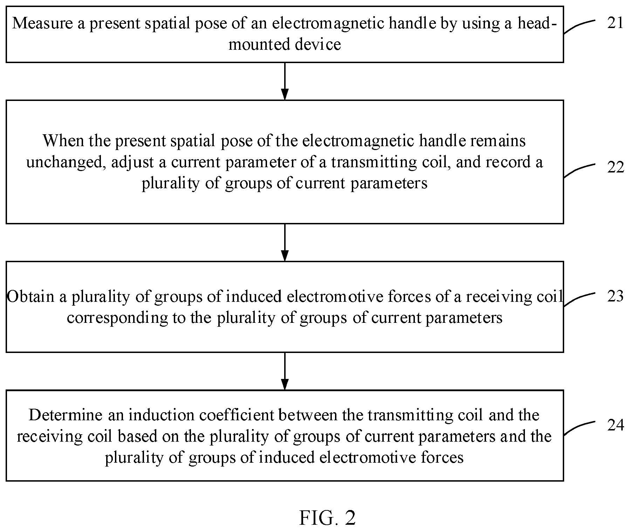

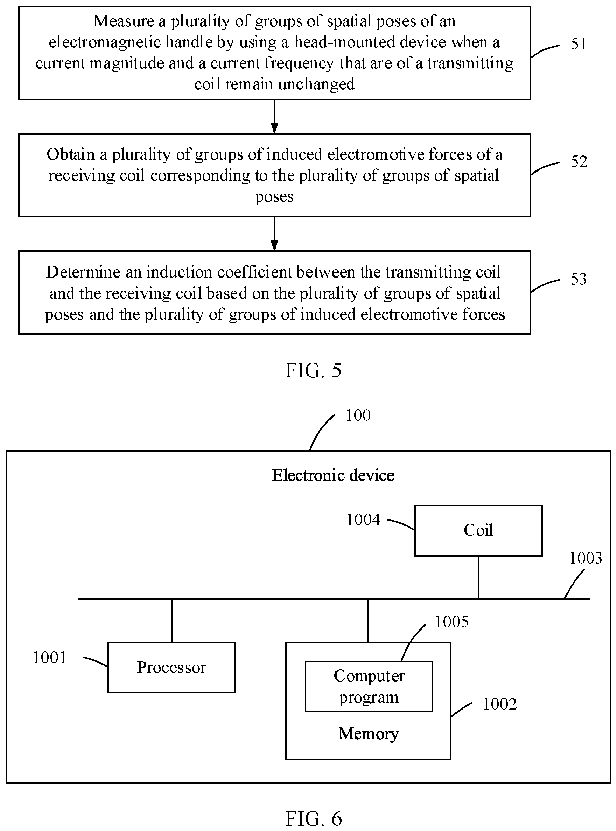

Refer to FIG. 2. FIG. 2 is a schematic flowchart of a handle correction method according to an embodiment of this application. The handle correction method may be applied to an electronic device 1000 (as shown in FIG. 6). In this embodiment, the handle correction method may include the following steps:

21: Measure a present spatial pose of an electromagnetic handle 100 by using a head-mounted device 200.

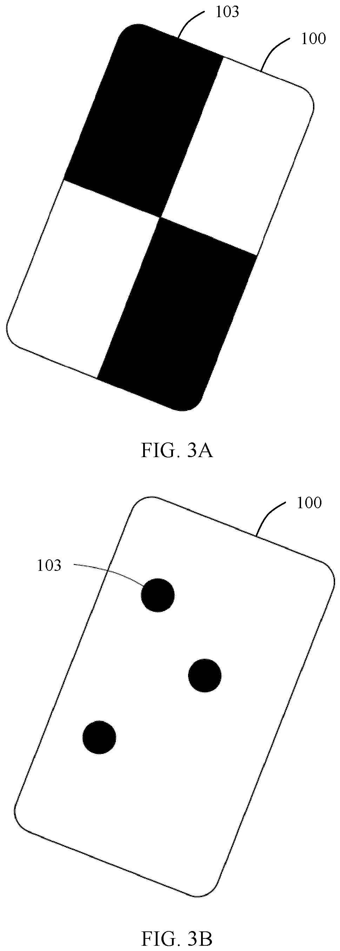

In some embodiments, the electromagnetic handle 100 includes a feature part 103 (as shown in FIG. 3) that can be tracked by the head-mounted device 200. The feature part 103 may be set based on an actual requirement. For example, as shown in FIG. 3A, the feature part 103 is a texture pattern that is provided on a surface of the electromagnetic handle 100, and a texture feature of the texture pattern may be extracted by using a statistical analysis method, a signal processing method, or the like. As shown in FIG. 3B, the feature part 103 may include a plurality of light sources, and the light source may be an infrared light source or another type of light source.

In some embodiments, when the electromagnetic handle 100 appears within a visual range of a binocular camera 202, the binocular camera 202 may be used to shoot to obtain two handle pictures (for example, one handle picture is obtained through shooting by a left camera of the binocular camera 202, and the other handle picture is obtained through shooting by a right camera of the binocular camera 202). Features of the feature part 103 in the two handle pictures are separately extracted, and the features of the two handle pictures are matched, to determine a common feature of the two handle pictures, for example, to determine a common feature point. Based on the common feature point obtained by matching, a 6DoF pose of the electromagnetic handle 100 may be obtained through calculation by using a preset algorithm. The 6DoF pose obtained through calculation may also be fused with posture information measured by an IMU 102, so that calculation precision of the 6DoF pose of the electromagnetic handle 100 can be improved.

For example, the feature part 103 is a texture pattern, and the binocular camera 202 is used to shoot the electromagnetic handle 100, to obtain two handle pictures. Texture features of the texture patterns in the two handle pictures are separately extracted. The texture features of the two handle pictures are matched, to determine a common texture feature of the two handle pictures. For the common texture feature obtained by matching, spatial location information of the electromagnetic handle 100 may be obtained through calculation by using an epipolar geometry algorithm or an optimization solution algorithm.

For example, the feature part 103 is a plurality of light sources, and coordinate information of center points of the light sources in a world coordinate system may be stored in advance. The binocular camera 202 is used to shoot the electromagnetic handle 100, to obtain two handle pictures. Light sources in the two handle pictures are separately extracted. The two handle pictures are matched, to determine a common light source of the two handle pictures. For the common light source obtained by matching, spatial location information of the electromagnetic handle 100 may be obtained through calculation by using a PNP (Perspective-N-Points) or an optimization solution algorithm.

In some embodiments, a user may choose to calibrate the electromagnetic handle 100 based on an actual requirement. For example, initial calibration of an induction coefficient is performed when the electromagnetic handle 100 is used for the first time, or correction of an induction coefficient is performed after the electromagnetic handle 100 is used for a long time. When a communication connection is established between the head-mounted device 200 and the electromagnetic handle 100, the user may select a handle correction function on the head-mounted device 200, so that correction on the electromagnetic handle 100 is enabled. When the correction on the electromagnetic handle 100 is enabled, the binocular camera 202 of the head-mounted device 200 is used to measure a spatial pose of the electromagnetic handle 100, and the induction coefficient is solved based on the spatial pose of the electromagnetic handle 100. In another embodiment, the handle correction function may alternatively be enabled by using the electromagnetic handle 100.

In some embodiments, magnetic field strength of a transmitting coil 201 may be obtained through calculation by using a formula (1):

$$B = \frac{\mu_r \mu_0 N_1 S_1 I}{4\pi} \left( \frac{3(H_0 * P) * P}{R^5} - \frac{H_0}{R^3} \right) \qquad (1)$$

An induced electromotive force of a receiving coil 101 may be obtained through calculation by using a formula (2):

$$E = N_2 S_2 \omega B \qquad (2)$$

B is the magnetic field strength of the transmitting coil 201, E is the induced electromotive force of the receiving coil 101, $\mu_r$ is a magnetic permeability of the transmitting coil 201, $\mu_0$ is a vacuum magnetic permeability, $N_1$ is a quantity of turns of the transmitting coil 201, $S_1$ is an area of the transmitting coil 201, I is a current magnitude of the transmitting coil 201, $H_0$ is a normal vector of a single-axis coil in the transmitting coil 201, P is a vector between a center point of the transmitting coil 201 and a center point of the receiving coil 101, R is a module of the vector P, $N_2$ is a quantity of turns of the receiving coil 101, $S_2$ is an area of the receiving coil 101, and $\omega$ is a current angular frequency ($\omega = 2\pi *$current frequency). A formula (3) may be obtained according to the formulas (1) and (2):

$$E = N_2 S_2 \omega \frac{\mu_r \mu_0 N_1 S_1 I}{4\pi} \left( \frac{3(H_0 * P) * P}{R^5} - \frac{H_0}{R^3} \right) \qquad (3)$$

It can be learned from the formula (3) that, when parameters I and $\omega$ remain unchanged, a magnitude of an induced electromotive force E changes with a change of a pose of the electromagnetic handle 100 and/or the head-mounted device 200. When the pose remains unchanged, the magnitude of the induced electromotive force E changes with a change of the current magnitude and/or the current frequency.

The induction coefficient may be defined as: $N_2 S_2 \omega \frac{\mu_r \mu_0 N_1 S_1 I}{4\pi}$ .

When a magnitude of the induction coefficient is determined, the 6DoF pose of the electromagnetic handle 100 may be directly determined based on the magnitude of the induced electromotive force E. For example, when the transmitting coil 201 in the head-mounted device 200 generates an electromagnetic field at a fixed current magnitude and a fixed current frequency to track the electromagnetic handle 100, relative locations and direction information of the electromagnetic handle 100 and the head-mounted device 200 may be directly determined based on the magnitude of the induced electromotive force E and the induction coefficient, so that the 6DoF pose of the electromagnetic handle 100 is obtained based on the relative locations and the direction information.

22: When the present spatial pose of the electromagnetic handle 100 remains unchanged, adjust a current parameter of the transmitting coil, and record a plurality of groups of current parameters.

In some embodiments, when the present spatial pose of the electromagnetic handle 100 is obtained through measurement by using the binocular camera 202, the current parameter of the transmitting coil 201 may be adjusted, and the plurality of groups of current parameters are recorded when the present spatial pose of the electromagnetic handle 100 remains unchanged. The current parameter may include the current magnitude or the current frequency. For example, the current magnitude may remain unchanged, the current frequency is adjusted, and a plurality of groups of current frequencies are recorded; or the current frequency may remain unchanged, the current magnitude is adjusted, and a plurality of groups of current magnitudes are recorded.

For example, when a user chooses to perform a correction function on the electromagnetic handle 100, the head-mounted device 200 may be used to prompt the user to move the electromagnetic handle 100 to a visual range of the binocular camera 202. When it is detected by using the binocular camera 202 that the 6DoF pose of the electromagnetic handle 100 can be calculated, the user may be prompted to keep the electromagnetic handle 100 still (and also keep the head-mounted device 200 still). In this case, the head-mounted device 200 may quickly adjust the current parameter of the transmitting coil, and record the plurality of groups of current parameters. For example, the plurality of groups of current frequencies of the transmitting coil are adjusted within two seconds, which may avoid discomfort caused by a need for the user to keep the electromagnetic handle 100 still for a long time.

23: Obtain a plurality of groups of induced electromotive forces of the receiving coil 101 corresponding to the plurality of groups of current parameters.

In some embodiments, the receiving coil 101 may generate a group of corresponding induced electromotive forces under each group of current parameters. A known electromotive force measurement circuit or chip may be disposed to measure an induced electromotive force, so that the plurality of groups of induced electromotive forces of the receiving coil 101 corresponding to the plurality of groups of current parameters are obtained.

For example, the receiving coil 101 is disposed in the electromagnetic handle 100, and an electromotive force measurement circuit may be disposed in the electromagnetic handle 100. A plurality of groups of induced electromotive forces obtained through measurement may be transmitted to the head-mounted device 200, which facilitates calculating the induction coefficient by using the head-mounted device 200 subsequently.

In some embodiments, the induction coefficient may also be calculated by using the electromagnetic handle 100. In this case, the plurality of groups of current parameters recorded by the head-mounted device 200 may be transmitted to the electromagnetic handle 100.

24: Determine an induction coefficient between the transmitting coil 201 and the receiving coil 101 based on the plurality of groups of current parameters and the plurality of groups of induced electromotive forces.

In some embodiments, it can be learned from the formula (3) that when a pose remains unchanged, to be specific, a value of a formula ( $\frac{3(H_0*P)*P}{R^5} - \frac{H_0}{R^3}$ ) remains unchanged, an induction coefficient is proportional to an induced electromotive force.

When the current magnitude remains unchanged, the induced electromotive force is proportional to the current angular frequency, or when the current frequency remains unchanged, the induced electromotive force is proportional to the current magnitude. When the plurality of groups of current parameters and the plurality of groups of induced electromotive forces are obtained, linear fitting may be performed on the plurality of groups of current parameters and the plurality of groups of induced electromotive forces, and a straight line slope obtained by fitting is calculated, where the straight line slope is the induction coefficient.

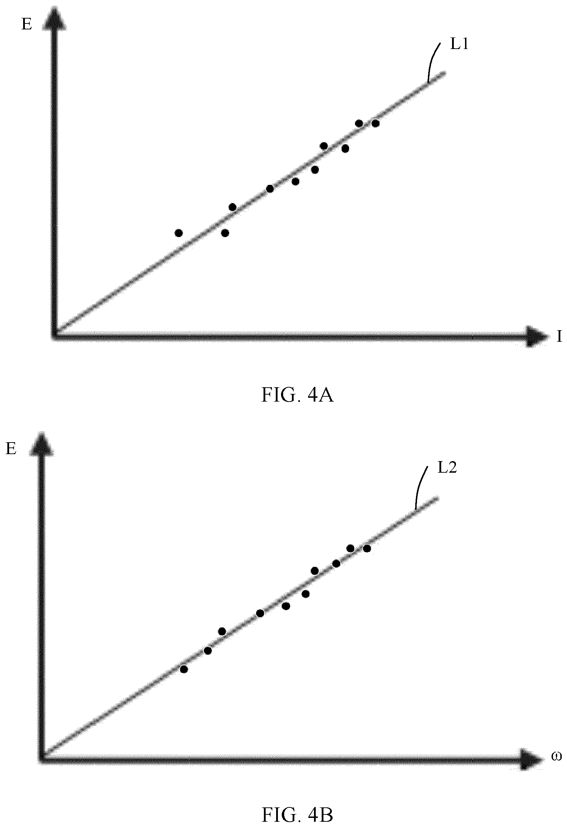

As shown in FIG. 4A, a current parameter is a current magnitude, and a current frequency remains unchanged. Linear fitting is performed on a plurality of groups of current magnitudes and a plurality of groups of induced electromotive forces to obtain a straight line L1. An induction coefficient may be obtained by calculating a slope of the straight line L1. For any two points A (x1, y1) and B (x2, y2) on the straight line L1, a slope k1 = (y1 - y2)/(x1 - x2), and the induction coefficient is equal to the slope k1.

For example, when linear fitting is performed on 10 groups: $(E_1, I_1)$, $(E_2, I_2)$, ..., and $(E_{10}, I_{10})$, and based on a linear equation: y = kx + b, it may be determined that:

$$kI_1 + b = E_1, \ kI_2 + b = E_2, \ kI_3 + b = E_3, \ ..., \ and \ kI_{10} + b = E_{10}.$$

A group of values of k and b may be obtained through each group of linear equations, values of k and b with a minimum fitting error in all results are obtained by using a least squares method, and the straight line L1 is obtained based on k and b with the minimum fitting error.

As shown in FIG. 4B, a current parameter is a current frequency, and a current magnitude remains unchanged. A plurality of groups of current angular frequencies may be obtained through conversion based on a plurality of groups of current frequencies. Linear fitting is performed on the plurality of groups of current angular frequencies and a plurality of groups of induced electromotive forces to obtain a straight line L2. An induction coefficient may be obtained by calculating a slope of the straight line L2. For any two points A (x3, y3) and B (x4, y4) on the straight line L2, a slope k2 = (y3 - y4)/(x3 - x4), and the induction coefficient is equal to the slope k2.

When an induction coefficient between the transmitting coil 201 and the receiving coil 101 is determined, a spatial pose of the electromagnetic handle 100 may be directly determined based on an induced electromotive force of the receiving coil 101 and the induction coefficient. For example, when a head-mounted device 200 tracks the electromagnetic handle 100, the induced electromotive force of the receiving coil 101 may be obtained through real-time measurement. Then relative locations and direction information of the electromagnetic handle 100 and the head-mounted device 200 are obtained based on the induced electromotive force obtained through real-time measurement and the induction coefficient, so that the spatial pose of the electromagnetic handle 100 may be obtained based on the relative locations and the direction information.

According to the foregoing handle correction method, a 6DoF pose of the electromagnetic handle may be first obtained by using a visual technology. Then a plurality of groups of induced electromotive forces are obtained by changing the current magnitude or the current frequency of the transmitting coil. Straight line fitting is performed on the plurality of groups of current magnitudes (or the plurality of groups of current angular frequencies) and the plurality of groups of induced electromotive forces to implement calibration of the induction coefficient.

Refer to FIG. 5. FIG. 5 is a schematic flowchart of a handle correction method according to an embodiment of this application. The handle correction method may be applied to an electronic device 1000 (as shown in FIG. 6). In this embodiment, the handle correction method may include the following steps:

51: Measure a plurality of groups of spatial poses of an electromagnetic handle 100 by using a head-mounted device 200 when a current magnitude and a current frequency that are of a transmitting coil 201 remain unchanged.

In some embodiments, it can be learned from the formula (3) that, when parameters I and ω remain unchanged, a magnitude of an induced electromotive force E changes with a change of a pose of the electromagnetic handle 100 and/or the head-mounted device 200. When the current magnitude and the current frequency that are of the transmitting coil 201 remain unchanged, if the electromagnetic handle 100 appears within a visual range of a binocular camera 202, the binocular camera 202 is used to shoot to obtain two handle pictures (for example, one handle picture is obtained through shooting by a left camera of the binocular camera 202, and the other handle picture is obtained through shooting by a right camera of the binocular camera 202). Features of a feature part 103 in the two handle pictures are separately extracted, and the features of the two handle pictures are matched, to determine a common feature of the two handle pictures. When a common feature point is obtained by matching, a 6DoF pose of the electromagnetic handle 100 may be obtained through calculation by using a preset algorithm. The 6DoF pose obtained through calculation may be fused with posture information measured by an IMU 102, to improve precision of the 6DoF pose of the electromagnetic handle 100 that is obtained through calculation.

52: Obtain a plurality of groups of induced electromotive forces of a receiving coil 101 corresponding to the plurality of groups of spatial poses.

In some embodiments, the receiving coil 101 may generate a group of corresponding induced electromotive forces under each group of spatial poses. A known electromotive force measurement circuit or chip may be disposed to measure an induced electromotive force, so that the plurality of groups of induced electromotive forces of the receiving coil 101 corresponding to the plurality of groups of spatial poses are obtained.

For example, the receiving coil 101 is disposed in the electromagnetic handle 100, and an electromotive force measurement circuit may be disposed in the electromagnetic handle 100. A plurality of groups of induced electromotive forces obtained through measurement may be transmitted to the head-mounted device 200, which facilitates calculating the induction coefficient by using the head-mounted device 200 subsequently. Alternatively, the induction coefficient may be calculated by using the electromagnetic handle 100. In this case, the plurality of groups of spatial poses obtained by the head-mounted device 200 may be transmitted to the electromagnetic handle 100.

53: Determine an induction coefficient between the transmitting coil 201 and the receiving coil 101 based on the plurality of groups of spatial poses and the plurality of groups of induced electromotive forces.

In some embodiments, it can be learned from the formula (3) that, when the current magnitude and the current frequency remain unchanged, to be specific, a value of a formula $N_2 S_2 \omega \frac{\mu_r \mu_0 N_1 S_1 I}{4\pi}$ remains unchanged, the induced electromotive force changes with a change of the pose.

When the plurality of groups of spatial poses and the plurality of groups of induced electromotive forces are obtained, the plurality of groups of spatial poses and the plurality of groups of induced electromotive forces may be solved to obtain a plurality of groups of induction coefficients. For the plurality of groups of induction coefficients, an optimal induction coefficient may be obtained through averaging or by using an optimization method such as gradient descent. For example, an average value of the plurality of groups of induction coefficients is defined as the induction coefficient between the transmitting coil 201 and the receiving coil 101.

In some embodiments, when a magnitude of the induction coefficient is determined, the 6DoF pose of the electromagnetic handle 100 may be directly determined based on the magnitude of the induced electromotive force E. For example, when the transmitting coil 201 in the head-mounted device 200 generates an electromagnetic field at a fixed current magnitude and a fixed current frequency to track the electromagnetic handle 100, relative locations and direction information of the electromagnetic handle 100 and the head-mounted device 200 may be directly determined based on the magnitude of the induced electromotive force E and the induction coefficient, so that the 6DoF pose of the electromagnetic handle 100 is obtained based on the relative locations and the direction information.

According to the foregoing handle correction method, when the current magnitude and the current frequency of the transmitting coil remain unchanged, a plurality of groups of 6DoF poses of the electromagnetic handle and a plurality of groups of induced electromotive forces corresponding to the plurality of groups of 6DoF poses may be obtained by using a vision technology, so that calibration of the induction coefficient is implemented based on the plurality of groups of 6DoF poses and the plurality of groups of induced electromotive forces.

Refer to FIG. 6. FIG. 6 is a schematic diagram of a hardware structure of an electronic device 1000 according to an embodiment of this application. As shown in FIG. 6, the electronic device 1000 may include a processor 1001, a memory 1002, a communication bus 1003, and a coil 1004. The electronic device 1000 may be an electromagnetic handle or a head-mounted device, and the coil 1004 may be a transmitting coil or receiving coil. The memory 1002 is configured to store one or more computer programs 1005. The one or more computer programs 1005 are configured to be executed by the processor 1001. The one or more computer programs 1005 may include instructions. The instructions may be used to perform the handle correction method in the electronic device 1000.

It may be understood that the structure shown in embodiments does not constitute a specific limitation on the electronic device 1000. In some other embodiments, the electronic device 1000 may include more or fewer components than those shown in the figure, or some components may be combined, or some components may be split, or different component arrangements may be used.

The processor 1001 may include one or more processing units. For example, the processor 1001 may include an application processor (application processor, AP), a graphics processing unit (graphics processing unit, GPU), an image signal processor (image signal processor, ISP), a controller, a video codec, a DSP, a CPU, a baseband processor, and/or a neural-network processing unit (neural-network processing unit, NPU), and the like. Different processing units may be independent components, or may be integrated into one or more processors.

A memory may be further disposed in the processor 1001, and is configured to store an instruction and data. In some embodiments, the memory in the processor 1001 is a cache memory. The memory may store an instruction or data that has been used or cyclically used by the processor 1001. If the processor 1001 needs to use the instruction or the data again, the instruction or the data may be directly invoked from the memory. This avoids repeated access, reduces waiting time of the processor 1001, and improves system efficiency.

In some embodiments, the processor 1001 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

In some embodiments, the memory 1002 may include a high-speed random access memory, and may further include a non-volatile memory, for example, a hard disk, a memory, a plug-in hard disk, a smart memory card (Smart Media Card, SMC), a secure digital (Secure Digital, SD) card, a flash card (Flash Card), at least one magnetic disk storage device, a flash device, or another volatile solid-state storage device.

An embodiment further provides a computer storage medium. The computer storage medium stores computer instructions. When the computer instructions are run on an electronic device, the electronic device is enabled to perform the foregoing related method steps, to implement the handle correction method in the foregoing embodiments.

An embodiment further provides a computer program product. When the computer program product is run on a computer, the computer is enabled to perform the foregoing related steps, to implement the handle correction method in the foregoing embodiments.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, to enable a chip to perform the handle correction method in the foregoing method embodiments.

The first electronic device, the computer storage medium, the computer program product, or the chip provided in embodiments is configured to perform the corresponding method provided above. Therefore, for beneficial effects that can be achieved, reference may be made to the beneficial effects of the corresponding method provided above. Details are not described herein again.

The foregoing descriptions of implementations allow a person skilled in the art to clearly understand that, for the purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the apparatus embodiments described above are merely examples. For example, division into the modules or units is merely logical function division, and may be other division in an actual implementation. For example, a plurality of units or assemblies may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

**Claims**

1. A handle correction method, comprising:

measuring a present spatial pose of an electromagnetic handle by using a head-mounted device, wherein the head-mounted device comprises a binocular camera and a first coil, the electromagnetic handle comprises a second coil, one of the first coil and the second coil is a transmitting coil, and the other of the first coil and the second coil is a receiving coil;
when the present spatial pose of the electromagnetic handle remains unchanged, adjusting a current parameter of the transmitting coil, and recording a plurality of groups of current parameters;
obtaining a plurality of groups of induced electromotive forces of the receiving coil corresponding to the plurality of groups of current parameters; and
determining an induction coefficient between the first coil and the second coil based on the plurality of groups of current parameters and the plurality of groups of induced electromotive forces, to determine a spatial pose of the electromagnetic handle based on the induction coefficient and an induced electromotive force of the receiving coil.

2. The handle correction method according to claim 1, wherein the electromagnetic handle comprises a feature part, and the measuring a present spatial pose of an electromagnetic handle by using a head-mounted device comprises:

capturing, by using the binocular camera, a handle image that comprises the feature part; and
performing analysis processing on the handle image by using a preset algorithm, to obtain the present spatial pose of the electromagnetic handle, wherein
the feature part comprises a texture pattern provided on a surface of the electromagnetic handle, or a plurality of light sources disposed on the electromagnetic handle, and the preset algorithm comprises a PNP (Perspective-N-Points) algorithm or an epipolar geometry algorithm.

3. The handle correction method according to claim 1 or 2, wherein the current parameter comprises a current magnitude or a current frequency.

4. The handle correction method according to claim 3, wherein the determining an induction coefficient between the first coil and the second coil based on the plurality of groups of current parameters and the plurality of groups of induced electromotive forces comprises:

performing linear fitting on a plurality of groups of current magnitudes and the plurality of groups of induced electromotive forces, and calculating a straight line slope obtained by fitting, to obtain the induction coefficient; or obtaining a plurality of groups of current angular frequencies through calculation based on a plurality of groups of current frequencies, performing linear fitting on the plurality of groups of current angular frequencies and the plurality of groups of induced electromotive forces, and calculating a straight line slope obtained by fitting, to obtain the induction coefficient.

5. The handle correction method according to claim 1 or 2, wherein the electromagnetic handle further comprises an inertial measurement unit (Inertial Measurement Unit, IMU), and the method further comprises:

determining posture information of the electromagnetic handle by using the IMU; and
performing information fusion on the posture information and the present spatial pose by using a preset fusion algorithm, wherein
the preset fusion algorithm comprises a filtering-based fusion algorithm or an optimization-based fusion algorithm.

6. The handle correction method according to claim 1 or 2, wherein the determining a spatial pose of the electromagnetic handle based on the induction coefficient and an induced electromotive force of the receiving coil comprises:
determining relative locations and direction information of the electromagnetic handle and the head-mounted device based on the induced electromotive force of the receiving coil and the induction coefficient, to obtain the spatial pose of the electromagnetic handle based on the relative locations and the direction information.

7. A handle correction method, comprising:

measuring a plurality of groups of spatial poses of an electromagnetic handle by using a head-mounted device when a current parameter of a transmitting coil remains unchanged, wherein the head-mounted device comprises a binocular camera and a first coil, the electromagnetic handle comprises a second coil, one of the first coil and the second coil is the transmitting coil, the other of the first coil and the second coil is a receiving coil, and the current parameter comprises a current magnitude and a current frequency;
obtaining a plurality of groups of induced electromotive forces of the receiving coil corresponding to the plurality of groups of spatial poses; and
determining an induction coefficient between the first coil and the second coil based on the plurality of groups of spatial poses and the plurality of groups of induced electromotive forces, to determine a spatial pose of the electromagnetic handle based on the induction coefficient and an induced electromotive force of the receiving coil.

8. The handle correction method according to claim 7, wherein the electromagnetic handle comprises a feature part, and the measuring a plurality of groups of spatial poses of an electromagnetic handle by using a head-mounted device comprises:

capturing, by using the binocular camera, handle images that are of the electromagnetic handle under a plurality of spatial locations and that comprise the feature part; and

performing analysis processing on the handle images by using a preset algorithm, to obtain the plurality of groups of spatial poses of the electromagnetic handle, wherein

the feature part comprises a texture pattern provided on a surface of the electromagnetic handle, or a plurality of light sources disposed on the electromagnetic handle, and the preset algorithm comprises a PNP (Perspective-N-Points) algorithm or an epipolar geometry algorithm.

9. The handle correction method according to claim 7 or 8, wherein the determining an induction coefficient between the first coil and the second coil based on the plurality of groups of spatial poses and the plurality of groups of induced electromotive forces comprises:
obtaining a plurality of groups of initial induction coefficients through calculation based on the plurality of groups of spatial poses and the plurality of groups of induced electromotive forces, and using an average value of the plurality of groups of initial induction coefficients as the induction coefficient between the first coil and the second coil.

10. The handle correction method according to claim 7 or 8, wherein the electromagnetic handle further comprises an IMU, and the method further comprises:

determining posture information of the electromagnetic handle by using the IMU; and

performing information fusion on the posture information and the spatial pose by using a preset fusion algorithm, wherein

the preset fusion algorithm comprises a filtering-based fusion algorithm or an optimization-based fusion algorithm.

11. The handle correction method according to claim 7 or 8, wherein the determining a spatial pose of the electromagnetic handle based on the induction coefficient and an induced electromotive force of the receiving coil comprises:
determining relative locations and direction information of the electromagnetic handle and the head-mounted device based on the induced electromotive force of the receiving coil and the induction coefficient, to obtain the spatial pose of the electromagnetic handle based on the relative locations and the direction information.

12. A computer-readable storage medium, wherein the computer-readable storage medium stores computer instructions, and when the computer instructions are run in an electronic device, the electronic device is enabled to perform the handle correction method according to any one of claims 1 to 11.

13. An electronic device, wherein the electronic device comprises a processor and a memory, the memory is configured to store instructions, and the processor is configured to invoke the instructions in the memory, so that the electronic device performs the handle correction method according to any one of claims 1 to 11.

14. A chip, wherein the chip is coupled to a memory in an electronic device, and the chip is configured to control the electronic device to perform the handle correction method according to any one of claims 1 to 11.

200

Head-mounted
device

201

Transmitting coil

202

Binocular camera

200

202

100

100

Electromagnetic
handle

101

Receiving coil

102

IMU

FIG. 1

Measure a present spatial pose of an electromagnetic handle by using a head-mounted device — 21

When the present spatial pose of the electromagnetic handle remains unchanged, adjust a current parameter of a transmitting coil, and record a plurality of groups of current parameters — 22

Obtain a plurality of groups of induced electromotive forces of a receiving coil corresponding to the plurality of groups of current parameters — 23

Determine an induction coefficient between the transmitting coil and the receiving coil based on the plurality of groups of current parameters and the plurality of groups of induced electromotive forces — 24

FIG. 2

103

100

FIG. 3A

100

103

FIG. 3B

FIG. 4A

FIG. 4B

Measure a plurality of groups of spatial poses of an electromagnetic handle by using a head-mounted device when a current magnitude and a current frequency that are of a transmitting coil remain unchanged — 51

Obtain a plurality of groups of induced electromotive forces of a receiving coil corresponding to the plurality of groups of spatial poses — 52

Determine an induction coefficient between the transmitting coil and the receiving coil based on the plurality of groups of spatial poses and the plurality of groups of induced electromotive forces — 53

FIG. 5

— 100

Electronic device

1004 — Coil

1003

Processor — 1001

1005

Computer program

Memory — 1002

FIG. 6

## INTERNATIONAL SEARCH REPORT

International application No.

**PCT/CN2021/138725**

### A. CLASSIFICATION OF SUBJECT MATTER

G06F 3/01(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, CNPAT, WPI, EPODOC: 标定, 校正, 电流, 感应系数, 线圈, 位姿, 调节, 电动势, calibration, current, parameter, coil, pose, adjust, electromotive force

### C. DOCUMENTS CONSIDERED TO BE RELEVANT

| Category* | Citation of document, with indication, where appropriate, of the relevant passages | Relevant to claim No. |
|---|---|---|
| A | CN 109633632 A (QINGDAO XIAONIAO KANKAN TECHNOLOGY CO., LTD.) 16 April 2019 (2019-04-16)<br>    description, paragraphs 5-17 | 1-14 |
| A | US 2020326544 A1 (MAGIC LEAP, INC.) 15 October 2020 (2020-10-15)<br>    entire document | 1-14 |
| A | CN 109655789 A (QINGDAO XIAONIAO KANKAN TECHNOLOGY CO., LTD.) 19 April 2019 (2019-04-19)<br>    entire document | 1-14 |
| A | CN 109613983 A (QINGDAO XIAONIAO KANKAN TECHNOLOGY CO., LTD.) 12 April 2019 (2019-04-12)<br>    entire document | 1-14 |
| A | CN 111174683 A (QINGDAO XIAONIAO KANKAN TECHNOLOGY CO., LTD.) 19 May 2020 (2020-05-19)<br>    entire document | 1-14 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 March 2022** | **15 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/138725**

| Patent document cited in search report | | | Publication date (day/month/year) | Patent family member(s) | | | Publication date (day/month/year) |
|---|---|---|---|---|---|---|---|
| CN | 109633632 | A | 16 April 2019 | None | | | |
| US | 2020326544 | A1 | 15 October 2020 | WO | 2020214272 | A1 | 22 October 2020 |
| | | | | US | 2021239993 | A1 | 05 August 2021 |
| CN | 109655789 | A | 19 April 2019 | None | | | |
| CN | 109613983 | A | 12 April 2019 | WO | 2020135539 | A1 | 02 July 2020 |
| | | | | US | 2022043270 | A1 | 10 February 2022 |
| CN | 111174683 | A | 19 May 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110018281